# EUROPEAN PATENT SPECIFICATION

(11) **EP 3 817 546 B1**
(45) Date of publication and mention of the grant of the patent: **15.04.2026**
(21) Application number: 19745775.7
(22) Date of filing: 13.06.2019
(51) Int. Cl.: A01K 13/00

(54) **PROTECTIVE INSOLE FOR PAWS**
SCHUTZUNTERLAGE FÜR TIERPFOTEN
SUPPORT PROTECTEUR POUR PATTES D'ANIMAUX

(30) Priority: 05.07.2018 IT 201800002961 U
(43) Date of publication of application: 12.05.2021
(73) Proprietor: Moleri, Claudia, 24042 Capriate San Gervasio (IT)
(72) Inventor: Moleri, Claudia, 24042 Capriate San Gervasio (IT)
(74) Representative: Tirloni, Bartolomeo
(86) International application number: PCT/IT2019/050135
(87) International publication number: WO 2020/008485

(56) References cited:
- WO-A1-2016/081021
- DE-A1- 102004 010 467
- JP-A- 2014 090 715
- US-B1- 8 468 978
- US-B2- 9 149 021

## Description

The present invention relates to a protective insole for paws of domestic animals, in particular for the paws of the dogs.

Typically, the paws of domestic animals, in particular the paws of the dogs, have anatomical parts, called bearings, structured for the ground support. Generally, these bearings can be divided into a major bearing and a plurality of minor bearings.

With the expression "major bearing" it is meant a bearing, present in the ground support portion of a paw of a domestic animal, with dimensions larger than any other bearing present.

With the expression "plurality of minor bearings" it is meant bearings, present in the ground support portion of a paw of a domestic animal, with dimensions similar between each other and smaller with respect to those of the major bearing.

With "ground support portion of the paw" it is meant a portion of the paw which typically come into contact with a support surface for ordinary (not crouched) position of arrest and/or movement of the animal (walking and/or running).

For example, the paw of a dog comprises five main bearings (leaving out possible bearings with much smaller dimensions usually present in the front paws). Among these main bearings, the major bearing is called the metacarpal bearing and it is placed approximately in the centre of the ground support portion of the paw, the remaining four minor bearings are called digital bearings and they are placed in an anterior region of the ground support portion of the paw.

The abovesaid bearings are particularly sensitive areas of the paw. They are in fact markedly vulnerable to the quite high temperatures that can be developed by walkable surfaces (e.g. asphalt) during particularly hot days (typically during the summer months). In addition, these sensitive areas may be subject to lacerations by foreign bodies that are unintentionally stepped on by the animal.

It is known producing protective footwear, of various shapes and/or types, for domestic animals, especially for dogs, which are to be fitted (e.g. strung) on the paws of the animal.

Documents US 9 149 021 B2 and DE 10 2004 010467 A1 disclose an animal paw pad.

The Applicant has found that the known footwear for domestic animals have some drawbacks and/or can be improved in some aspects.

First of all, the Applicant has noticed that the known footwear for domestic animals are inconvenient to use, since their application to, and subsequent removal from, the paws of the animal is difficult and/or time-consuming. In addition, the known footwear can be uncomfortable to be worn for the animal itself.

Object of the present invention is therefore to provide a protective insole for the paws of a domestic animal which is economical, easy to be applied and to be removed, which is reliable in terms of protection of the paw from the possible high temperature of a walkable surface and/or from lacerations caused by foreign bodies and which is comfortable to be worn and/or to be applied/removed for the animal.

According to the Applicant, the problem of realizing one or more of these objects is solved by a protective insole in accordance with the attached claims and/or having the following features.

The present invention relates to a protective insole for paws of domestic animals according to claim 1.

According to the Applicant the presence of the first and of the second portion, suitably arranged on the upper face, causes that the protective insole can be fixed to the paw at the bearings (below them and so as to be interposed between the paw and a support surface) in an easy and fast way, by means of the respective adhesive layers. In addition, the third portion, suitably arranged and non-adhesive, avoids that the hair, typically present between the major bearing and the minor bearings, remains attached to the insole, causing annoyance to the animal during the removal of the insole.

Since the respective adhesive layer of the first and second portion occupies substantially entirely the respective plant extension of the respective portion, the first and second portions can adhere in an effective manner to the respective bearings. The present invention in one or more of the aforesaid aspects can have one or more of the following preferred features.

Preferably said insole is elastically flexible. In this way it is allowed a better adaptation of the insole to the conformation of the paw of the animal, favouring the application of the insole and/or its maintenance in position during use.

Preferably said insole is structured to be applied to a paw of a dog, wherein in use said major bearing corresponds to the metacarpal bearing of the paw and said plurality of minor bearings corresponds to the plurality of digital bearings of the paw. In this way all the bearings can rest on the first and second portion.

Preferably said insole develops along a flat extension, in use substantially parallel to a ground support portion of the paw. In this way the insole is comfortable to be worn (for the animal) and to be used.

Preferably said insole has a respective thickness, substantially perpendicular to said flat extension of development. In this way it is provided a protection from the possible high temperatures of the walkable surfaces and/or from the lacerations caused by foreign bodies.

Preferably said upper face and lower face are parallel to said respective flat extension of development and they are placed at a mutual distance equal to said respective thickness.

Preferably said flat extension of development of the insole is substantially equal to a plant extension of a ground support portion of the paw of an animal. In this way the insole favours the protection of the whole ground support portion of the paw without hindering the movements of the animal (for example without markedly protruding below the paw).

Preferably said third portion completely separates said first and second portion from one another. In this way it is favoured the abovesaid effect of avoiding the attachment of the hair.

Preferably said respective plant extension of said first portion is substantially equal to a contact area on the insole of said major bearing. In this way the first portion is substantially entirely occupied by the major bearing (when laying on the insole) and at the same time it is avoided that the hair which typically surrounds the aforementioned major bearing (and which generally covers part of the ground support portion of the paw) can adhere to it.

Preferably said respective plant extension of said second portion is substantially equal to a contact area on the insole of said plurality of minor bearings. In this way the second portion is substantially occupied by the plurality of minor bearings (when laying on the insole).

Preferably each respective adhesive layer of said first and second portion comprises a pressure-sensitive adhesive. In this way it is possible to secure the insole to the paw by pressure of it on the paw itself or vice-versa.

Preferably each respective adhesive layer of said first and second portion is structured to allow the insole to be removed from the paw (for example the adhesive layers comprise a low gluing adhesive). In this way it is possible to easily remove the insole once its use is ended.

The features and advantages of the present invention will be further clarified by the following detailed description of some embodiments, presented by way of nonlimiting example of the present invention, with reference to the attached figures, in which:
figure 1 shows a perspective view of a first embodiment of a protective insole according to the present invention;
figure 2 shows a top view of the insole of figure 1;
figure 3 shows a top view of a protective insole not forming part of the present invention.

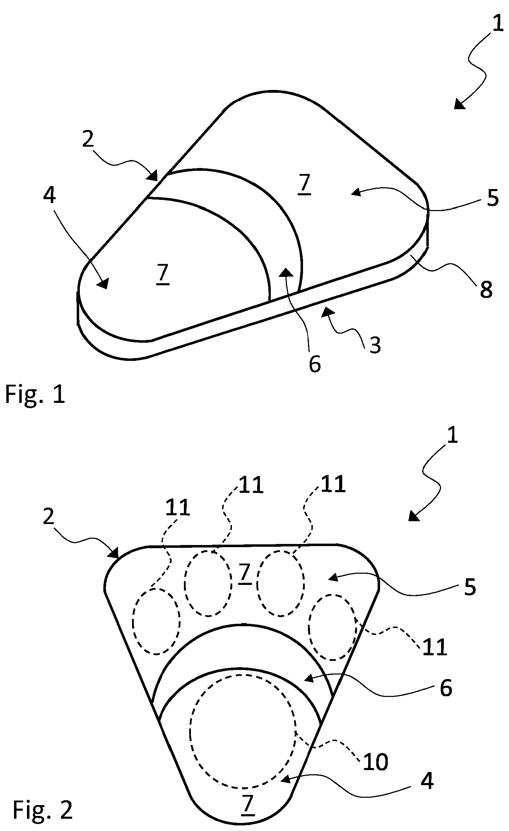

In the figures 1 and 2 with number 1 is indicated a protective insole for paws of domestic animals according to the present invention.

Exemplarily the insole 1 is elastically flexible and it comprises an upper face 2 and a lower face 3 (not visible in the figures), the upper face 2 comprising a first 4, a second 5 and a third portion 6. In use the first 4 and the second portions 5 are placed at contact areas 10, 11 (shown in broken lines in figure 2) on the insole 1 respectively of a major bearing and a plurality of minor bearings of a paw of an animal.

Each first 4 and second portion 5 comprises a respective adhesive layer 7 and the third portion 6 is interposed between the first 4 and second portion 5 and it does not comprise any adhesive.

Exemplarily the insole 1 is structured to be applied to the paw of a dog, wherein the major bearing corresponds to the metacarpal bearing of the paw and the plurality of minor bearings corresponds to the plurality of digital bearings of the paw.

Exemplarily the insole 1 develops along a flat extension, in use substantially parallel to a ground support portion of the paw (not shown), and it has a respective thickness 8, substantially perpendicular to the flat extension of development.

Exemplarily the upper face 2 and lower face 3 are parallel to the respective flat extension of development and they are placed at a mutual distance equal to the respective thickness 8 of the insole 1.

Exemplarily the flat extension of development of the insole 1 is substantially equal to a plant extension of a ground support portion of the paw of the animal (substantially reproducing its contour).

As shown in the figures, the third portion 6 can completely separate the first 4 and the second portion 5 from one another.

Each of the first 4 and second portion 5 has a respective plant extension.

As exemplarily shown in the figures 1 and 2, the respective adhesive layer 7 of the first 4 and second portion 5 entirely occupies the respective plant extension of the respective portion.

Exemplarily the respective plant extension of the first portion 4 is substantially equal to a contact area 10 on the insole of the major bearing and the respective plant extension of the second portion 5 is substantially equal to a contact area 11 on the insole 1 of the plurality of minor bearings.

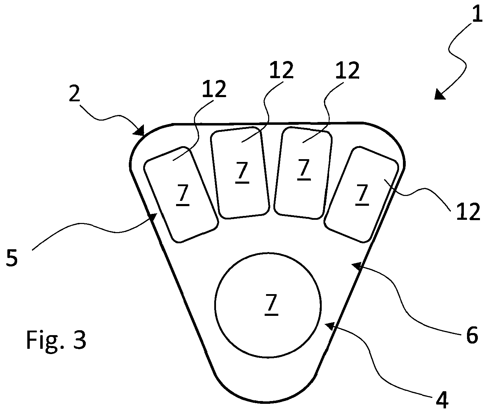

As shown in fig. 3, according to an embodiment not part of the present invention, the second portion 5 comprises respective sub-portions 12, distinct and separate from each other (e.g. not contiguous), wherein each sub-portion is, in use, at a contact area 11 on the insole 1 of one and only one bearing of the plurality of minor bearings (e.g. a single digital bearing) of a paw of an animal. The respective adhesive layer 7 of the second portion 5 occupies the respective sub-portions 12 only.

Exemplarily each respective adhesive layer 7 of the first 4 and of the second portion 5 comprises a pressure-sensitive adhesive and it is structured to allow to the insole 1 to be able to be removed from the paw (exemplarily the adhesive layer 7 are made of a low gluing adhesive).

In use, an insole 1 is applied to each paw of the animal, at the respective ground support portion of the paws, so that the insoles are interposed between the paw and the walkable surface. Each insole is fixed to the respective paw by means of the adhesive layers 7 of the first 4 and of the second portion 5, which are made to correspond respectively to the major bearing and to the plurality of minor bearings. In this way it is ensured a gluing of the insole to the paw only at the abovesaid bearings. The third portion 6, non-adhesive, is at the hair usually interposed between the major bearing and the plurality of minor bearings. In this way it is avoided an annoying gluing of the hair to the insole, in favour of a greater ease of removal of the latter once its use is ended.

## Claims

1. Protective insole (1) for paws of domestic animals comprising an upper face (2) and a lower face (3), said upper face (2) comprising a first (4), a second (5) and a third portion (6), wherein said first (4) and second portion (5), in use, are arranged at contact areas (10, 11) on the insole (1) respectively of a major bearing and of a plurality of minor bearings of a paw of an animal, wherein each of said first (4) and second portion (5) comprises a respective adhesive layer (7) and wherein said third portion (6) is interposed between said first (4) and second portion (5) and it does not comprise any adhesive,
wherein each of said first (4) and second portion (5) has a respective plant extension, wherein said respective adhesive layer (7) of said first (4) and second portion (5) substantially entirely occupies said respective plant extension of the respective portion,
**characterized in that** said second portion (5) does not comprise sub-portions distinct and separate from each other.

2. Insole (1) according to claim 1, wherein said third portion (6) completely separates said first (4) and second portion (5) from one another, and wherein said insole (1) is elastically flexible.

3. Insole (1) according to any one of the previous claims, wherein said insole (1) is structured to be applied to a paw of a dog, wherein said major bearing corresponds to the metacarpal bearing of the paw and said plurality of minor bearings corresponds to the plurality of digital bearings of the paw.

4. Insole (1) according to any one of the previous claims, wherein said insole (1) develops along a flat extension, in use substantially parallel to a ground support portion of the paw.

5. Insole (1) according to any one of the previous claims, wherein said insole (1) has a respective thickness (8), substantially perpendicular to said flat extension of development.

6. Insole (1) according to any one of the previous claims, wherein said upper face (2) and lower face (3) are parallel to said respective flat extension of development and they are placed at a mutual distance equal to said respective thickness (8).

7. Insole (1) according to any one of the previous claims, wherein said flat extension of development of the insole (1) is substantially equal to a plant extension of a ground support portion of the paw of an animal.

8. Insole (1) according to any one of the previous claims, wherein said respective plant extension of said first portion (4) is substantially equal to a contact area (10) on the insole of said major bearing.

9. Insole (1) according to any one of the previous claims, wherein said respective plant extension of said second portion (5) is substantially equal to a contact area (11) on the insole of said plurality of minor bearings.

10. Insole (1) according to any one of the previous claims, wherein each respective adhesive layer (7) of said first (4) and second portion (5) comprises a pressure-sensitive adhesive.

11. Insole (1) according to any one of the previous claims, wherein each respective adhesive layer (7) of said first (4) and second portion (5) comprises a low gluing adhesive.

## Patentansprüche

1. Schutzsohle (1) für Pfoten von Haustieren, umfassend eine obere Fläche (2) und eine untere Fläche (3), wobei die obere Fläche (2) einen ersten (4), einen zweiten (5) und einen dritten Abschnitt (6) umfasst, wobei der erste (4) und der zweite Abschnitt (5) im Gebrauch an Kontaktbereichen (10, 11) auf der Sohle (1) jeweils eines Hauptballens und einer Mehrzahl von Nebenballen einer Pfote eines Tieres angeordnet sind, wobei jeder des ersten (4) und des zweiten Abschnitts (5) jeweils eine entsprechende Klebeschicht (7) umfasst und wobei der dritte Abschnitt (6) zwischen dem ersten (4) und dem zweiten Abschnitt (5) angeordnet ist und keinen Klebstoff umfasst,
wobei jeder des ersten (4) und des zweiten Abschnitts (5) eine jeweilige plantarische Ausdehnung aufweist, wobei die jeweilige Klebeschicht (7) des ersten (4) und des zweiten Abschnitts (5) im Wesentlichen vollständig die jeweilige plantarische Ausdehnung des jeweiligen Abschnitts einnimmt,
**dadurch gekennzeichnet, dass** der zweite Abschnitt (5) keine voneinander verschiedenen und voneinander getrennten Unterabschnitte umfasst.

2. Sohle (1) nach Anspruch 1, wobei der dritte Abschnitt (6) den ersten (4) und den zweiten Abschnitt (5) vollständig voneinander trennt, und wobei die Sohle (1) elastisch flexibel ist.

3. Sohle (1) nach einem beliebigen der vorhergehenden Ansprüche, wobei die Sohle (1) dazu ausgebildet ist, auf eine Pfote eines Hundes aufgebracht zu werden, wobei der Hauptballen dem Metakarpalballen der Pfote entspricht und die Mehrzahl von Nebenballen der Mehrzahl von Zehenballen der Pfote entspricht.

4. Sohle (1) nach einem beliebigen der vorhergehenden Ansprüche, wobei sich die Sohle (1) entlang einer flachen Ausdehnung erstreckt, die im Gebrauch im Wesentlichen parallel zu einem Bodenauflageabschnitt der Pfote ist.

5. Sohle (1) nach einem beliebigen der vorhergehenden Ansprüche, wobei die Sohle (1) eine jeweilige Dicke (8) aufweist, die im Wesentlichen senkrecht zu der flachen Ausdehnung ist.

6. Sohle (1) nach einem beliebigen der vorhergehenden Ansprüche, wobei die obere Fläche (2) und die untere Fläche (3) parallel zu der flachen Ausdehnung sind und in einem gegenseitigen Abstand angeordnet sind, der der jeweiligen Dicke (8) entspricht.

7. Sohle (1) nach einem beliebigen der vorhergehenden Ansprüche, wobei die flache Ausdehnung der Sohle (1) im Wesentlichen einer plantarischen Ausdehnung eines Bodenauflageabschnitts der Pfote eines Tieres entspricht.

8. Sohle (1) nach einem beliebigen der vorhergehenden Ansprüche, wobei die jeweilige plantarische Ausdehnung des ersten Abschnitts (4) im Wesentlichen einem Kontaktbereich (10) auf der Sohle des Hauptballens entspricht.

9. Sohle (1) nach einem beliebigen der vorhergehenden Ansprüche, wobei die jeweilige plantarische Ausdehnung des zweiten Abschnitts (5) im Wesentlichen einem Kontaktbereich (11) auf der Sohle der Mehrzahl von Nebenballen entspricht.

10. Sohle (1) nach einem beliebigen der vorhergehenden Ansprüche, wobei jede jeweilige Klebeschicht (7) des ersten (4) und des zweiten Abschnitts (5) einen druckempfindlichen Klebstoff umfasst.

11. Sohle (1) nach einem beliebigen der vorhergehenden Ansprüche, wobei jede jeweilige Klebeschicht (7) des ersten (4) und des zweiten Abschnitts (5) einen Klebstoff mit geringer Klebkraft umfasst.

## Revendications

1. Semelle protectrice (1) pour pattes d'animaux domestiques comprenant une face supérieure (2) et une face inférieure (3), ladite face supérieure (2) comprenant une première (4), une deuxième (5) et une troisième portion (6), dans laquelle ladite première (4) et ladite deuxième portion (5), en utilisation, sont disposées au niveau de zones de contact (10, 11) sur la semelle (1) respectivement d'un appui principal et d'une pluralité d'appuis mineurs d'une patte d'un animal, dans laquelle chacune de ladite première (4) et de ladite deuxième portion (5) comprend une couche adhésive respective (7) et dans laquelle ladite troisième portion (6) est interposée entre ladite première (4) et ladite deuxième portion (5) et ne comprend aucun adhésif,
dans laquelle chacune de ladite première (4) et de ladite deuxième portion (5) présente une extension plantaire respective, dans laquelle ladite couche adhésive respective (7) de ladite première (4) et de ladite deuxième portion (5) occupe substantiellement entièrement ladite extension plantaire respective de la portion respective,
**caractérisée en ce que** ladite deuxième portion (5) ne comprend pas de sous-portions distinctes et séparées les unes des autres.

2. Semelle (1) selon la revendication 1, dans laquelle ladite troisième portion (6) sépare complètement ladite première (4) et ladite deuxième portion (5) l'une de l'autre, et dans laquelle ladite semelle (1) est élastiquement flexible.

3. Semelle (1) selon une quelconque des revendications précédentes, dans laquelle ladite semelle (1) est structurée pour être appliquée à une patte d'un chien, dans laquelle ledit appui principal correspond à l'appui métacarpien de la patte et ladite pluralité d'appuis mineurs correspond à la pluralité d'appuis digitaux de la patte.

4. Semelle (1) selon une quelconque des revendications précédentes, dans laquelle ladite semelle (1) se développe selon une extension plane, en utilisation substantiellement parallèle à une portion d'appui au sol de la patte.

5. Semelle (1) selon une quelconque des revendications précédentes, dans laquelle ladite semelle (1) présente une épaisseur respective (8), substantiellement perpendiculaire à ladite extension plane de développement.

6. Semelle (1) selon une quelconque des revendications précédentes, dans laquelle ladite face supérieure (2) et ladite face inférieure (3) sont parallèles à ladite extension plane respective de développement et sont placées à une distance mutuelle égale à ladite épaisseur respective (8).

7. Semelle (1) selon une quelconque des revendications précédentes, dans laquelle ladite extension plane de développement de la semelle (1) est substantiellement égale à une extension plantaire d'une portion d'appui au sol de la patte d'un animal.

8. Semelle (1) selon une quelconque des revendications précédentes, dans laquelle ladite extension plantaire respective de ladite première portion (4) est substantiellement égale à une zone de contact (10) sur la semelle dudit appui principal.

9. Semelle (1) selon une quelconque des revendications précédentes, dans laquelle ladite extension plantaire respective de ladite deuxième portion (5) est substantiellement égale à une zone de contact (11) sur la semelle de ladite pluralité d'appuis mineurs.

10. Semelle (1) selon une quelconque des revendications précédentes, dans laquelle chaque couche adhésive respective (7) de ladite première (4) et de ladite deuxième portion (5) comprend un adhésif sensible à la pression.

11. Semelle (1) selon une quelconque des revendications précédentes, dans laquelle chaque couche adhésive respective (7) de ladite première (4) et de ladite deuxième portion (5) comprend un adhésif à faible pouvoir de collage.
